# EUROPÄISCHE PATENTANMELDUNG

(11) **EP 3 351 893 A1**
(43) Veröffentlichungstag der Anmeldung: **25.07.2018**
(21) Anmeldenummer: 18151441.5
(22) Anmeldetag: 12.01.2018
(51) Int. Cl.: G01B 11/00, G01B 5/008

(54) **MESSVORRICHTUNG UND VERFAHREN ZUR ERFASSUNG WENIGSTENS EINER LÄNGENMESSGRÖSSE**

(30) Priorität: 19.01.2017 DE 102017100991
(71) Anmelder: CARL MAHR HOLDING GMBH, 37073 Göttingen (DE)
(72) Erfinder: Ziegenbein, Rainer, 37124 Rosdorf (DE)
(74) Vertreter: Rüger, Barthelt & Abel

(57) **Zusammenfassung**

Die Erfindung betrifft eine Messvorrichtung (10) sowie ein Verfahren zur Ermittlung einer Längenmessgröße eines Werkstücks. Über eine Positionieranordnung (12) kann ein Trägerteil (13), an dem eine Tasteinheit (18) in einer ersten Raumrichtung (x) unbeweglich angeordnet ist, bewegt bzw. positioniert werden. Mit dem Trägerteil (13) ist wenigstens ein Laserinterferometer (24) in der ersten Raumrichtung (x) unbeweglich verbunden. Das Laserinterferometer (24) erzeugt mittels eines ersten Lasermessstrahls (L1) und eines zweiten Lasermessstrahls (L2) ein erstes Messsignal (S1), das den Abstand des Laserinterferometers (24) von einem ersten Reflektor (25) in der ersten Raumrichtung (x) beschreibt und ein zweites Messsignal (S2), das den Abstand des Laserinterferometers (24) von einem zweiten Reflektor (26) in der ersten Raumrichtung (x) beschreibt. Eine in der ersten Raumrichtung (x) gegenüber dem Trägerteil (13) bzw. der Tasteinheit (18) unbewegliche Tastsystemebene (E), die sich rechtwinklig zu dieser ersten Raumrichtung (x) erstreckt, hat daher in der ersten Raumrichtung (X) eine Position, die sich über die Abstände des Laserinterferometers (24) vom ersten Reflektor (25) bzw. zweiten Reflektor (26) ermitteln lässt.

## Beschreibung

Die Erfindung betrifft eine Messvorrichtung sowie ein Verfahren zur Erfassung wenigstens einer Längenmessgrö-ße an einem Werkstück. Die Messvorrichtung hat hierfür eine Tasteinheit, die das Werkstück mechanisch berührend oder berührungslos, beispielsweise optisch, antasten kann, um die Längenmessgröße zu erfassen. Beispielsweise können Außendurchmesser, Innendurchmesser, Konturen, usw. des Werkstücks gemessen werden.

Aus DE 1588 018 B2 ist eine Vorrichtung zum Positionieren eines Kreuzschlittens bekannt. Die Vorrichtung arbeitet mit einem optischen Abbildungssystem, um die Position des Kreuzschlittens zu ermitteln. Es wird auch darauf hingewiesen, dass zur Verbesserung der Messgenauigkeit Messsysteme in Form von fotoelektrischen Interferometern oder fotoelektrischen Mikroskopen bekannt sind.

Bei der interferometrischen Messung ist es notwendig, den Brechungsindex des Mediums, in der Regel Luft, zu ermitteln, in dem der Lichtstrahl sich ausbreitet. Hierzu kann ein externes hochgenaues Refraktometer verwendet werden. Allerdings verläuft der Messstrahl des Interferometers nicht an dem Ort, an dem das Refraktometer den Brechungsindex misst. Außerdem ist die Bestimmung des Brechungsindex nicht zeitsynchron mit der Längenmessung durch das Interferometer. Da der Brechungsindex durch sich ändernde Umgebungseinflüsse, wie Luftschlieren, sich ändernde Gasbestandteile der Luft, Temperaturänderungen, usw. beeinflusst wird, kann es durch die nicht zeitsynchrone und örtlich von dem Interferometer mit Abstand durchgeführte Brechungsindexermittlung zu Messungenauigkeiten kommen.

Ausgehend vom Stand der Technik kann es daher als Aufgabe der vorliegenden Erfindung angesehen werden, eine Messvorrichtung und ein Verfahren zu schaffen, das eine hochgenaue Längenmessung ermöglicht.

Diese Aufgabe wird durch eine Messvorrichtung mit den Merkmalen des Patentanspruches 1 sowie ein Verfahren mit den Merkmalen des Patentanspruches 17 gelöst.

Die Messvorrichtung hat eine Maschinenbasis, an der ein Trägerteil in wenigstens einem Freiheitsgrad bewegbar gelagert ist. Das Trägerteil ist vorzugsweise in wenigstens einem linearen Freiheitsgrad bewegbar. Eine Positionieranordnung ist dazu eingerichtet, das Trägerteil in dem wenigstens einen Freiheitsgrad zu bewegen bzw. zu positionieren.

Die Messvorrichtung verfügt außerdem über eine Tasteinheit, die am Trägerteil angeordnet ist. Die Tasteinheit ist dazu eingerichtet, ein Werkstück zur Erfassung einer Längenmessgröße anzutasten. Das Antasten kann mechanisch berührend oder berührungslos, insbesondere optisch, erfolgen. Eine berührend antastende Tasteinheit hat einen Tasteinsatz mit einem Tastarm, an dessen freiem Ende ein Tastkörper oder eine Tastspitze zum Antasten des Werkstücks sitzt. Eine optisch antastende Tasteinheit hat einen Lichtsender sowie einen Lichtempfänger, der das vom Lichtsender emittierte und am Werkstück reflektierte Licht empfängt.

Das die Tasteinheit tragende Trägerteil definiert eine Tastsystemebene, deren Position relativ zum Trägerteil unveränderlich ist. Die Tasteinheit kann zwar beweglich, beispielsweise drehbar oder linear bewegbar, am Trägerteil angeordnet sein, jedoch derart, dass sich die Tasteinheit nicht in einem Freiheitsgrad rechtwinklig zur Tastsystemebene relativ zum Trägerteil bewegt werden kann. Über die Bestimmung der Position der Tastsystemebene in einem Freiheitsgrad rechtwinklig zur Erstreckung der Tastsystemebene kann auf diese Weise die Position der Tasteinheit und zum Beispiel eines Tastkörpers bzw. einer Tastspitze zur Messung der Längenmessgröße ermittelt werden.

Die Messvorrichtung hat wenigstens eine Interferometeranordnung. Jede Interferometeranordnung hat wenigstens ein Laserinterferometer (Doppelinterferometer), einen ersten Reflektor und einen zweiten Reflektor. Das Laserinterferometer (Doppelinterferometer) ist dazu eingerichtet, einen ersten Lasermessstrahl in einer ersten Abstrahlrichtung auf den ersten Reflektor abzustrahlen und einen zweiten Lasermessstrahl in einer zweiten Abstrahlrichtung auf den zweiten Reflektor abzustrahlen. Die erste Abstrahlrichtung und die zweite Abstrahlrichtung sind entgegengesetzt orientiert. Die erste und die zweite Abstrahlrichtung sind rechtwinklig zur Tastsystemebene ausgerichtet.

Der erste Reflektor und der zweite Reflektor sind während der Messung unbeweglich an der Maschinenbasis angeordnet, wenn das Laserinterferometer (Doppelinterferometer) während der Messung unbeweglich am Trägerteil angeordnet ist, oder alternativ auch umgekehrt, so dass sich das Laserinterferometer (Doppelinterferometer) und die Reflektoren während der Messung bei einer Bewegung des Trägerteils relativ zu der Maschinenbasis relativ zueinander bewegen. Die Reflektoren können beispielsweise unmittelbar an der Maschinenbasis angeordnet oder mittelbar, insbesondere mittels eines Messrahmens, an der Maschinenbasis angeordnet sein. Es ist möglich, dass das Laserinterferometer (Doppelinterferometer) und/oder die Reflektoren nicht fest mit dem Trägerteil bzw. der Maschinenbasis verbunden sind, sondern zu Justagezwecken vor oder nach, aber nicht während Messungen kontrolliert bewegbar bzw. einstellbar sind.

Das Laserinterferometer (Doppelinterferometer) ist außerdem dazu eingerichtet, den vom ersten Reflektor reflektierten ersten Lasermessstrahl und den vom zweiten Reflektor reflektierten zweiten Lasermessstrahl zu empfangen. Die beiden reflektierten Lasermessstrahlen werden, wie bei einem Interferometer bekannt, mit einem Referenzlaserstrahl überlagert und zur Interferenz gebracht. Anhand der zurückgelegten Wege der Lasermessstrahlen kann dadurch der eine Abstand vom Laserinterferometer zum ersten Reflektor und der andere Abstand vom Laserinterferometer zum zweiten Reflektor in einer Auswerteeinheit separat ermittelt werden. Jeder dieser ermittelten Abstände beschreibt auch den ersten Abstand der Tastsystemebene vom ersten Reflektor und den zweiten Abstand der Tastsystemebene vom zweiten Reflektor. Die Auswerteeinheit ist dazu eingerichtet, die Position der Tastsystemebene relativ zu den Reflektoren und/oder relativ zu der Maschinenbasis zu ermitteln.

Der Abstand zwischen den beiden Reflektoren ist bekannt. Durch die redundante Information aus der Messung mit den beiden Lasermessstrahlen können sich ändernde Umgebungsbedingungen, die die Messung beeinträchtigen, erkannt werden, insbesondere in Echtzeit und zwar an der Stelle, an der auch interferometrisch gemessen wird. Dadurch ist es möglich, Umgebungseinflüsse beim Bestimmen der Position der Tastsystemebene zu berücksichtigen und in Echtzeit eine Korrektur der Messung durchzuführen.

Die Auswerteeinheit kann beispielsweise dazu eingerichtet sein, den ersten Abstand der Tastsystemebene zu dem ersten Reflektor und den zweiten Abstand der Tastsystemebene zum zweiten Reflektor zu ermitteln. Die Summe aus dem ersten Abstand und dem zweiten Abstand charakterisiert bzw. entspricht dem bekannten Reflektorabstand zwischen dem ersten Reflektor und dem zweiten Reflektor. Ändert sich die Abstandssumme, so kann daraus geschlossen werden, dass die Messung durch Umgebungseinflüsse beeinträchtigt wurde, beispielsweise aufgrund einer Längenänderung in der Messvorrichtung (Drift) und/oder aufgrund einer Beeinflussung der Lichtwellenlänge im Messweg des ersten oder des zweiten Lasermessstrahls.

Es ist außerdem möglich, dass die Auswerteeinheit dazu eingerichtet ist, auf Basis der Änderung der Abstandssumme einen korrigierten ersten Abstand und/oder einen korrigierten zweiten Abstand zu berechnen. Wird sowohl der korrigierte erste Abstand, als auch der korrigierte zweite Abstand berechnet, können diese beiden korrigierten Werte gemeinsam zur Ermittlung einer korrigierten Position der Tastsystemebene verwendet werden. Dadurch lassen sich Fehler weiter reduzieren. Beispielsweise kann als korrigierte Position der Tastsystemebene eine mittlere Position ermittelt werden, die sich zwischen dem von dem korrigierten ersten Abstand und dem von dem korrigierten zweiten Abstand ermittelten Position befindet.

Bei einer bevorzugten Ausführungsform weist die Messvorrichtung zwei separate Interferometeranordnungen auf. Die Laserinterferometer der beiden Interferometeranordnungen sind parallel zur Tastsystemebene mit Abstand zueinander angeordnet. Vorzugsweise haben die beiden Laserinterferometer jeweils denselben Abstand zu einer Mittelebene, die rechtwinklig zu der Tastsystemebene durch die Tasteinheit verläuft. Wenn der Abstand der Laserinterferometer zur Mittelebene ungleich groß ist, muss die Differenz bekannt sein und kann bei der Korrektur entsprechend berücksichtigt werden. In dieser Mittelebene findet das Antasten des Werkstücks durch die Tasteinheit statt, entweder mechanisch berührend oder berührungslos. Die Mittelebene entspricht sozusagen einer virtuellen Abbe-Ebene. Obwohl die Tasteinheit nicht auf einer Geraden mit den Lasermessstrahlen der Laserinterferometer antastet, lassen sich dadurch Messungenauigkeiten vermeiden.

Durch mehrere in einer Raumrichtung mit Abstand zueinander angeordnete und in dieselbe weitere Raumrichtung messende Interferometeranordnungen können Ausrichtungsfehler, Drehungen, Kippungen, usw. - insbesondere in der Schlittenanordnung - um eine Achse, die rechtwinkelig zu diesen beiden Raumrichtungen ausgerichtet ist, zusätzlich erkannt werden.

Es kann auch lediglich eine einzige Interferometeranordnung vorhanden sein, die in einer Mittelebene angeordnet ist, die durch die Tasteinheit verläuft und rechtwinkelig zu der Tastsystemebene ausgerichtet ist.

Der Auswerteeinheit wird ein Brechungsindexwert der Luft beispielsweise als Anfangswert vorgegeben. Dies ist für die Bestimmung des ersten Abstands und/oder des zweiten Abstands erforderlich, da die Lichtwellenlänge des abgestrahlten Lichts vom Brechungsindex abhängt und die Lichtwellenlänge wiederum für die interferometrische Längenmessung bekannt sein muss. Die Bestimmung des vorzugebenden Anfangswerts für den Brechungsindexwert kann beim Initialisieren der Maschine während eines Einmessvorgangs einmalig erfolgen. Hierfür kann beispielsweise ein externes Refraktometer oder eine andere Einrichtung verwendet werden, mittels der ein Brechungsindexwert der Luft ermittelt werden kann. Die Messvorrichtung und die externe Einrichtung werden eine Zeitlang betrieben. Wenn sich die Messsignale der Messvorrichtung und der externe Einrichtung aufgrund von Schwankungen in den Umgebungsbedingungen synchron ändern, ist ein eingeschwungener Zustand erreicht. Der dabei festgestellte Brechungsindexwert der Luft wird der Auswerteeinheit vorgegeben. Während des Betriebs der Messvorrichtung können Veränderungen des Brechungsindex durch eine Interferometeranordnung erfasst und bei der Messung zur Korrektur berücksichtigt werden.

Der Brechungsindex kann erneut ermittelt und der Auswerteeinheit vorgegeben werden, wenn ein vorgegebenes Ereignis auftritt, beispielsweise wenn ein Lasermessstrahl unterbrochen wird oder Änderungen an der Messvorrichtung vorgenommen wurden.

Es ist außerdem vorteilhaft, wenn die vorhandenen Reflektoren an einem Messrahmen angeordnet sind. Der Messrahmen ist wiederum unbeweglich mit der Maschinenbasis verbunden. Der Messrahmen kann aus einem gegenüber Temperaturänderungen unempfindlichen Material hergestellt sein, das sich von dem Material der Maschinenbasis unterscheiden kann.

Es ist außerdem vorteilhaft, wenn an der Maschinenbasis die Positioniereinrichtung mit Linearführungen und/oder Rotationsführungen in einem oder mehreren Freiheitsgraden angeordnet ist. Der Messrahmen stützt keine durch die Messvorrichtung oder das Werkstück verursachten Kräfte ab.

Bei einer bevorzugten Ausführungsform kann der Messrahmen eine erste Säule aufweisen, an der der erste Reflektor angeordnet ist. Gegenüberliegend kann eine zweite Säule vorhanden sein, an der der zweite Reflektor angeordnet ist. Die Säulen können beispielsweise eine quaderförmige Gestalt haben. Bei mehreren Interferometeranordnungen weist der Messrahmen entsprechend mehrere Säulenpaare auf, die sich jeweils paarweise gegenüberliegen. Vorzugsweise sind die vorhandenen Säulen über eine gemeinsame Grundplatte des Messrahmens miteinander verbunden. Die Säulen und die Grundplatte sind vorzugsweise ohne Naht- und Fügestelle einstückig aus einem einheitlichen Material hergestellt. Die Reflektoren können auf die Säulen und/oder die Grundplatte aufgebracht bzw. aufgesprengt werden.

Als Reflektoren können beispielsweise Spiegel verwendet werden. Dadurch ist sichergestellt, dass der reflektierte Lasermessstrahl auch bei einer großen Entfernung zwischen dem Laserinterferometer und dem betreffenden Reflektor, der reflektierte Lasermessstrahl auf eine genau bestimmbare Stelle am Laserinterferometer auftrifft.

Bei einer weiteren bevorzugten Ausführungsform kann jedes Laserinterferometer einer Interferometeranordnung dazu eingerichtet sein, einen dritten Lasermessstrahl in eine dritte Abstrahlrichtung auf einen dritten Reflektor abzustrahlen und den dort reflektierten dritten Lasermessstrahl zu empfangen. Die dritte Abstrahlrichtung ist rechtwinklig zur ersten und zur zweiten Abstrahlrichtung ausgerichtet, beispielsweise in einer Vertikalrichtung oder in einer Horizontalrichtung. Das Laserinterferometer der wenigstens einen Interferometeranordnung kann auch dazu eingerichtet ist, einen vierten Lasermessstrahl entgegengesetzt zu der dritten Abstrahlrichtung in eine vierte Abstrahlrichtung auf einen vierten Reflektor abzustrahlen und den am vierten Reflektor reflektierten dritten Lasermessstrahl zu empfangen. Dadurch kann die Position der Tasteinheit bzw. des Trägerteils zusätzlich in einer weiteren Raumrichtung relativ zum dritten und/oder vierten Reflektor bzw. zur Maschinenbasis ermittelt werden, wobei diese weitere Raumrichtung parallel zu der Tastsystemebene und/oder zu der Mittelebene oder rechtwinkelig dazu ausgerichtet ist. In Weiterbildung dazu ist auch eine Ausgestaltung vorteilhaft, bei der sechs Reflektoren pro Interferometereinheit vorhanden sind und sechs Lasermessstrahlen paarweise entgegengesetzt in alle Raumrichtungen auf jeweils einen Reflektor abgestrahlt werden.

Es ist außerdem möglich, für jeden linearen Freiheitsgrad, in dem die Tasteinheit über die Positioniereinrichtung bewegt werden kann, jeweils wenigstens eine vorstehend beschriebene Interferometeranordnung vorzusehen.

Vorteilhafte Ausgestaltungen der Messvorrichtung des Verfahrens ergeben sich aus den abhängigen Patentansprüchen, der Beschreibung und den Zeichnungen. Nachfolgend werden bevorzugte Ausführungsbeispiele anhand der beigefügten Zeichnungen im Einzelnen erläutert. Es zeigen:

Figur 1 eine schematische perspektivische Prinzipdarstellung eines Ausführungsbeispiels einer Messvorrichtung,

Figur 2 eine blockschaltbildähnliche Darstellung der Messvorrichtung aus Figur 1,

Figur 3 eine blockschaltbildähnliche Darstellung eines weiteren Ausführungsbeispiels einer Messvorrichtung mit zwei Tasteinheiten und beispielsgemäß vier Interferometeranordnungen,

Figur 4 eine Prinzipdarstellung eines Laserinterferometers, wie es bei den Messvorrichtungen verwendet werden kann und

Figur 5 eine Prinzipskizze, die das Ermitteln einer Position einer Tastsystemebene relativ zu zwei Reflektoren unter Verwendung eines Laserinterferometers erläutert.

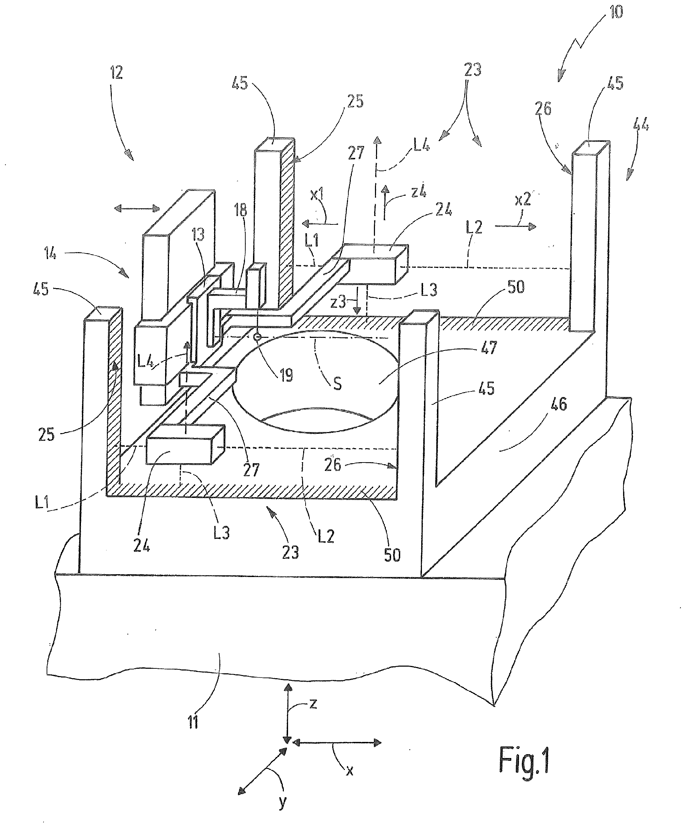

In den Figuren 1-3 sind Ausführungsbeispiele einer Messvorrichtung 10 veranschaulicht. Die Messvorrichtung 10 weist eine Maschinenbasis 11 auf, die zum Aufstellen der Messvorrichtung 10 auf einem Untergrund dient. Die Maschinenbasis 11 kann beispielsweise ein Maschinengestell oder ein gegossener Körper sein.

An der Maschinenbasis 11 ist eine Positionieranordnung 12 vorhanden. Die Positionieranordnung 12 dient zum Bewegen und Positionieren eines Trägerteils 13 in wenigstens einem Freiheitsgrad relativ zur Maschinenbasis 11. Das Trägerteil 13 kann beispielsweise über eine Schlittenanordnung 14 in drei linearen Freiheitsgraden relativ zu der Maschinenbasis 11 bewegbar bzw. positionierbar sein. Die Positionieranordnung 12 weist hierfür entsprechende Antriebe auf. Die Positionieranordnung 12 kann auch rotative Führungen und Antriebe aufweisen. Das Trägerteil 13 kann in bis zu sechs Freiheitsgraden bewegbar sein. Die Anzahl der linearen Freiheitsgrade und der rotative Freiheitsgrade ist jeweils beliebig. Bei dem hier veranschaulichten Ausführungsbeispiel ist das Trägerteil 13 zumindest in einer ersten Raumrichtung x in einem linearen Freiheitsgrad bewegbar und optional auch in den anderen Raumrichtungen y, z in jeweils einem linearen Freiheitsgrad.

An dem Trägerteil 13 ist eine Tasteinheit 18 angeordnet. Die Tasteinheit 18 dient zum Antasten eines nicht dargestellten Werkstücks zur Erfassung einer Längenmessgrö-ße. Die Tasteinheit 18 kann als mechanisch berührende Tasteinheit 18 oder als berührungslos arbeitende Tasteinheit 18 ausgeführt sein. Bei den hier veranschaulichten Ausführungsbeispielen ist eine berührend antastende Tasteinheit mit einem Tastkörper 19 in Form einer Tastkugel veranschaulicht. Der Kontakt des Tastkörpers 19 mit einem Werkstück wird durch die Tasteinheit 18 erkannt und anhand der Position des Tastkörpers 19 gegenüber einer Ausgangslage - z.B. der Abstand zu einer Kalibrierebene K, die rechtwinkelig zu der Antastrichtung ausgerichtet ist - kann die Längenmessgröße am Werkstück gemessen werden.

Die Tasteinheit 18 ist in der ersten Raumrichtung x unbeweglich am Trägerteil 13 angeordnet. Bei einem Ausführungsbeispiel kann es möglich sein, die Tasteinheit 18 um eine Schwenkachse S, die sich in der ersten Raumrichtung x erstreckt, gegenüber dem Trägerteil 13 zu schwenken. Auch eine lineare Bewegbarkeit in einer zweiten Raumrichtung y oder einer dritten Raumrichtung z, die jeweils rechtwinklig zu der ersten Raumrichtung x ausgerichtet sind, kann optional bzw. alternativ zu der Schwenkbarkeit um die Schwenkachse S vorgesehen sein.

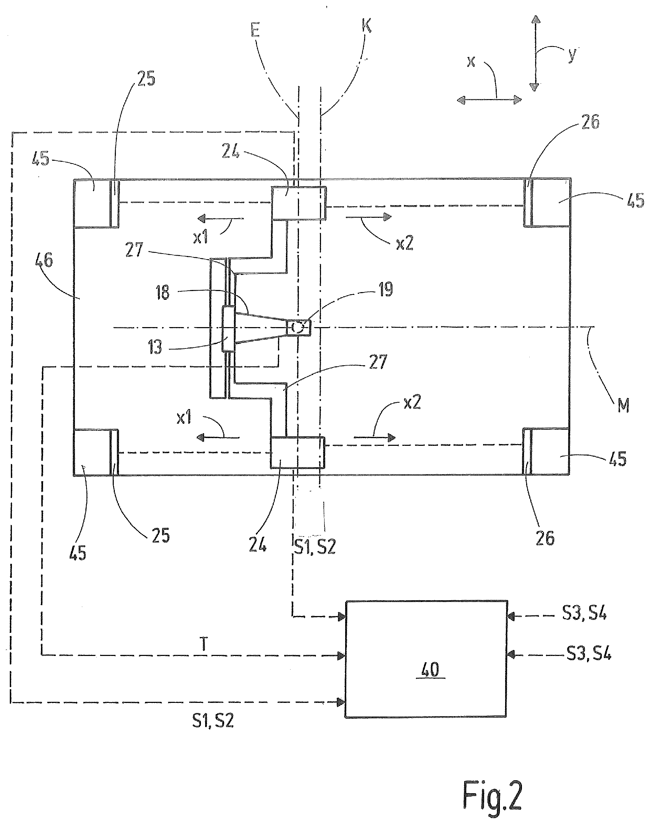

Zu der Messvorrichtung 10 gehört außerdem wenigstens eine und gehören bei dem Ausführungsbeispiel gemäß der Figuren 1 und 2 zwei separate Interferometeranordnungen 23. Zu jeder Interferometeranordnung 23 gehört jeweils ein Laserinterferometer 24, ein erster Reflektor 25 sowie ein zweiter Reflektor 26. Die Reflektoren 25, 26 sind beispielsweise durch Spiegel gebildet. Jedes Laserinterferometer 24 ist als Doppelinterferometer ausgeführt und weist somit zwei Interferometereinheiten auf. Bei dem hier gezeigten Ausführungsbeispiel erstreckt sich jeder erste und zweite Reflektor 25, 26 parallel zu einer Ebene, die durch die zweite Raumrichtung y und die dritte Raumrichtung z aufgespannt wird. Bei jeder Interferometeranordnung 23 liegen sich der erste Reflektor 25 und der zweite Reflektor 26 paarweise gegenüber. Der erste Reflektor 25 und der zweite Reflektor 26 einer Interferometeranordnung 23 sind gegenüber der Maschinenbasis 11 unbeweglich angeordnet.

Das Laserinterferometer 24 ist über eine Halterung 27 unbeweglich am Trägerteil 13 angeordnet. Die Relativposition des Laserinterferometers 24 ändert sich somit gegenüber dem Trägerteil 13 nicht. Das Trägerteil 13 kann in der zweiten Raumrichtung y unbeweglich oder soweit beweglich sein, dass die Laserinterferometer 24 in dieser zweiten Raumrichtung y in einem Bereich zwischen dem jeweils zugeordneten ersten Reflektor 25 und zweiten Reflektor 26 positioniert bleiben und von dem Laserinterferometer abgestrahlte Lasermessstrahlen auf die Reflektoren 25, 26 auftreffen. Das Trägerteil 13 ist über die Schlittenanordnung 12 beispielsgemäß in allen Raumrichtungen x, y, z bewegbar.

Die beiden Interferometeranordnungen 23 bzw. die beiden Laserinterferometer 24 haben in der zweiten Raumrichtung y einen Abstand zueinander. Vorzugsweise sind die beiden Laserinterferometer 24 im selben Abstand zu einer Mittelebene M angeordnet, die durch die Tasteinrichtung 18 verläuft. Vorzugsweise wird das Werkstück in dieser Mittelebene M durch die Tasteinrichtung 18 angetastet. Beispielsgemäß befindet sich der Tastkörper 19 beim Antasten in der Mittelebene M. Die Mittelebene M erstreckt sich beim Ausführungsbeispiel in einer Ebene, die durch die erste Raumrichtung x und die dritte Raumrichtung z aufgespannt wird.

Das Trägerteil 13 definiert eine Tastsystemebene E. Diese Tastsystemebene E ist relativ zum Trägerteil 13 und mithin auch relativ zu der Tasteinheit 18 und dem wenigstens einen Laserinterferometer 24 unbeweglich. Die Tastsystemebene E erstreckt sich rechtwinklig zur Mittelebene M. Beispielsweise kann sich die Tastsystemebene E durch den Tastkörper 19 hindurch erstrecken.

Jedes Laserinterferometer 24 strahlt einen ersten Lasermessstrahl L1 in eine erste Abstrahlrichtung x1 und einen zweiten Lasermessstrahl L2 in eine zweite Abstrahlrichtung x2 ab. Die erste Abstrahlrichtung x1 ist entgegengesetzt zur zweiten Abstrahlrichtung x2. Die beiden Abstrahlrichtungen x1, x2 sind parallel zur ersten Raumrichtung x ausgerichtet.

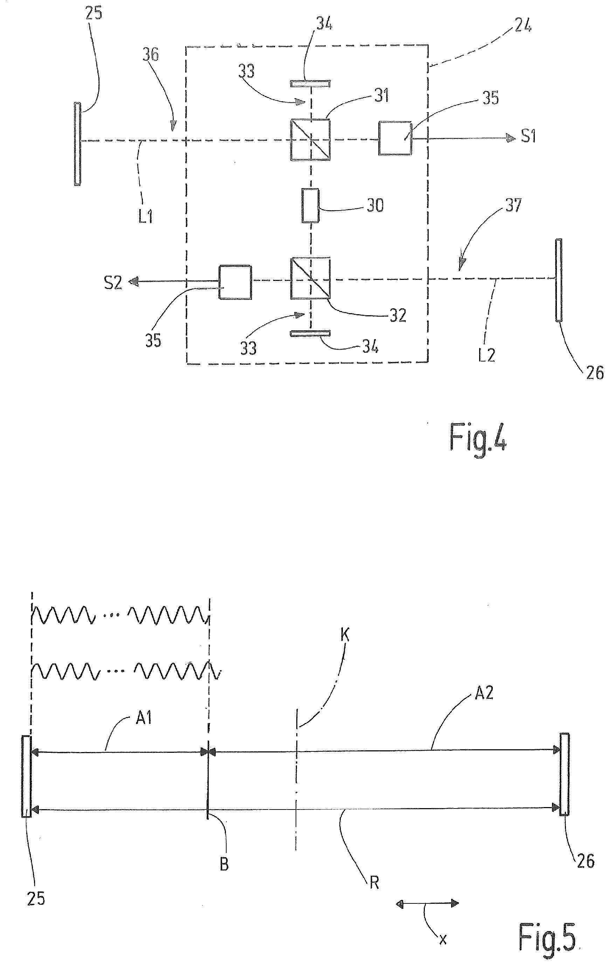

Der erste Lasermessstrahl L1 ist auf den ersten Reflektor 25 gerichtet, wird dort reflektiert und von dem Laserinterferometer 24 wieder empfangen. Der zweite Lasermessstrahl L2 ist auf den zweiten Reflektor 26 gerichtet, wird dort reflektiert und von dem Laserinterferometer 24 empfangen. Der schematische Aufbau eines Laserinterferometers 24 ist in sehr vereinfachter Form in Figur 4 veranschaulicht.

Eine Laserquellenanordnung 30 mit zumindest einem Laser erzeugt Laserlicht, das auf einen ersten Strahlteiler 31 und einen zweiten Strahlteiler 32 gerichtet wird. Der erste Strahlteiler 31 teilt das einfallende Licht in den ersten Lasermessstrahl L1, der in einen ersten Messlichtweg 36 abgegeben wird, und Referenzlaserstrahl, der in einen Referenzlichtweg 33 abgegeben wird. Analog hierzu teilt der zweite Strahlteiler 32 das einfallende Laserlicht in den zweiten Lasermessstrahl L2, der in einen zweiten Messlichtweg 37 abgegeben wird, und einen in einen weiteren Referenzlichtweg 33 abgegebenen Referenzlaserstrahl. Die Referenzlichtwege 33 sind jeweils durch einen Spiegel 34 abgeschlossen, der den vom betreffenden Strahlteiler 31, 32 kommenden Referenzlaserstrahl wieder zurück reflektiert.

Der am ersten Reflektor 25 reflektierte erste Lasermessstrahl L1 und der am zweiten Reflektor 26 reflektierte zweite Lasermessstrahl L2 werden im ersten Strahlteiler 31 bzw. zweiten Strahlteiler 32 mit dem aus dem jeweiligen Referenzlichtweg 33 stammenden Referenzlaserstrahl überlagert und auf einen Lichtempfänger, beispielsweise eine Kamera 35, gerichtet. Die Überlagerung bewirkt konstruktiver und/oder destruktive Interferenz. Die Kamera 35 kann das vom jeweils zugeordneten Strahlteiler 31 bzw. 32 stammende, überlagerte Licht empfangen. Anhand der Interferenz können Veränderungen im Lichtweg des ersten Lasermessstrahls L1 sowie des zweiten Lasermessstrahls L2 mit hoher Genauigkeit erkannt werden.

Das schematisch in Figur 4 dargestellte Laserinterferometer 24 kann auch als Doppelinterferometer bezeichnet werden, weil es zwei separate Messlichtwege 36, 37 aufweist. Der erste Messlichtweg 36 entspricht dem Weg des ersten Lasermessstrahls L1 vom Laserinterferometer 24 zum ersten Reflektor 25 und von dort zurück zum Laserinterferometer 24. Der zweite Messlichtweg 37 entspricht dem Weg des zweiten Lasermessstrahls L2 vom Laserinterferometer 24 zum zweiten Reflektor 26 und wieder zurück zum Laserinterferometer 24.

Jedes Laserinterferometer 24 liefert ein erstes Messsignal S1, das den Abstand zwischen dem Laserinterferometer 24 und dem ersten Reflektor 25 beschreibt, sowie ein zweites Messsignal S2, das den Abstand des Laserinterferometers 24 vom zweiten Reflektor 26 beschreibt. Das erste Messsignal S1 und das zweite Messsignal S2 jedes Laserinterferometers 24 werden einer Auswerteeinheit 40 übermittelt. Außerdem wird der Auswerteeinheit 40 das beim Antasten des Werkstücks durch die Tasteinheit 18 erzeugte Tastsignal T übermittelt.

Bei dem hier veranschaulichten Ausführungsbeispiel sind zwei Interferometeranordnungen 23 und mithin zwei erste Reflektoren 25 und zwei zweite Reflektoren 26 vorhanden. In Figur 1 ist zu erkennen, dass die Reflektoren 25, 26 nicht unmittelbar an der Maschinenbasis 11 angeordnet sind. An der Maschinenbasis 11 ist unbeweglich ein Messrahmen 44 angeordnet, der wiederum die vorhandenen ersten Reflektoren 25 und zweiten Reflektoren 26 trägt. Jeder dieser Reflektoren 25, 26 ist an einer Säule 45 des Messrahmens 44 angeordnet. Die beiden Säulen 45, die einen ersten Reflektor 25 und einen zweiten Reflektor 26 einer gemeinsamen Interferometeranordnung 23 tragen, liegen sich in der ersten Raumrichtung x mit Abstand gegenüber. Die Säulen 45 erstrecken sich ausgehend von einer gemeinsamen Grundplatte 46 in die dritte Raumrichtung z. Die beispielsgemäß vier Säulen 45 und die Grundplatte 46 bilden den Messrahmen 44, der beispielsgemäß einstückig ohne Naht- und Fügestelle aus einem einheitlichen Material hergestellt ist. Das Material des Messrahmens 46 kann sich von dem Material der Maschinenbasis 11 unterscheiden.

Die Säulen 45 haben beim Ausführungsbeispiel eine quaderförmige Gestalt. Der erste Reflektor 25 und der zweite Reflektor 26 können dadurch sehr einfach an einer Quaderseite der Säule 45 angebracht werden, die sich in einer Ebene erstreckt, die durch die zweite Raumrichtung y und die dritte Raumrichtung z aufgespannt ist.

Der Messrahmen 44 ist frei von Lasten, die von der Messvorrichtung 10 oder dem Werkstück erzeugt werden, insbesondere frei von Kräften und Momenten, die vom Werkstück, von der Tasteinheit 18 oder von der Positionieranordnung 12 erzeugt werden und durch die Maschinenbasis 11 abgestützt werden. Mithin sind Verformungen des Messrahmens durch äußere Kräfte vermieden, um die Messgenauigkeit nicht zu beeinträchtigen.

In dem Messrahmen 44 und beispielsgemäß in der Grundplatte 46, kann daher eine Aussparung 47 vorhanden sein, durch die eine Werkstückaufnahme, wie etwa ein drehbarer Teller oder Spanneinheit hindurchragen kann, ohne sich am Messrahmen 44 abzustützen.

Die vorstehende Messvorrichtung 10 gemäß der Figuren 1 und 2 arbeitet wie folgt:

Um eine Längenmessgröße an einem Werkstück bestimmen zu können, wenn das Werkstück durch die Tasteinheit 18 angetastet wird, ist es erforderlich, die Position der Tasteinheit 18 zu kennen. Beispielsgemäß kann das Antasten entlang der ersten Raumrichtung x erfolgen. Es ist dann erforderlich, die Position der Tastsystemebene E in der ersten Raumrichtung x zu ermitteln, beispielsgemäß relativ zu einer Kalibrierebene K. Hierfür wird die wenigstens eine Interferometeranordnung 23 verwendet.

Anhand des ersten Messsignals S1 und des zweiten Messsignals S2 kann ein erster Abstand der Tastsystemebene E vom ersten Reflektor 25 und ein zweiter Abstand A2 der Tastsystemebene E vom zweiten Reflektor 26 in der Auswerteeinheit 40 ermittelt werden. Denn die Laserinterferometer 24 sind unbeweglich mit dem Trägerteil 13 verbunden und daher nicht relativ zur Tastsystemebene E beweglich. Der Reflektorabstand R in der ersten Raumrichtung x zwischen dem ersten Reflektor 25 und dem zweiten Reflektor 26 ist bekannt. Die Abstandssumme aus dem ersten Abstand A1 und dem zweiten Abstand A2 charakterisiert bzw. entspricht also dem Reflektorabstand R. Wenn sich diese Abstandssumme aus dem ersten Abstand A1 und dem zweiten Abstand A2 ändert, kann die Auswerteeinheit 40 daraus schließen, dass die Veränderung durch Umgebungseinflüsse hervorgerufen wurde. Solche Umgebungseinflüsse können eine oder mehrere Längen der Messvorrichtung 10 verändern, wie etwa die Orientierung der Bewegung der Schlittenanordung im Raum. Durch Umgebungseinflüsse kann sich auch die Lichtwellenlänge verändern, beispielsweise wenn sich die Gaszusammensetzung der Luft verändert oder deren Dichte (aufgrund von Temperaturänderungen), usw.

Solche Umgebungseinflüsse werden durch die erfindungsgemäße Messvorrichtung 10 berücksichtigt. Sie werden in Echtzeit erkannt und können zu einer Korrektur der ermittelten Position der Tastsystemebene E in der ersten Raumrichtung x in Echtzeit verwendet werden.

Wenn sich die Abstandssumme aus dem ersten Abstand A1 und dem zweiten Abstand A2 ausgehend von einem kalibrierten Wert verändert, kann diese Veränderung anteilig bei der Berechnung eines korrigierten ersten Abstands sowie eines korrigierten zweiten Abstands berücksichtigt werden. Hat sich beispielsweise die Abstandssumme um 0,1 % vergrößert, kann der gemessene erste Abstand A1 und der gemessene zweite Abstand A2 um jeweils 0,1 % reduziert werden, um den korrigierten ersten Abstand und den korrigierten zweiten Abstand zu erhalten.

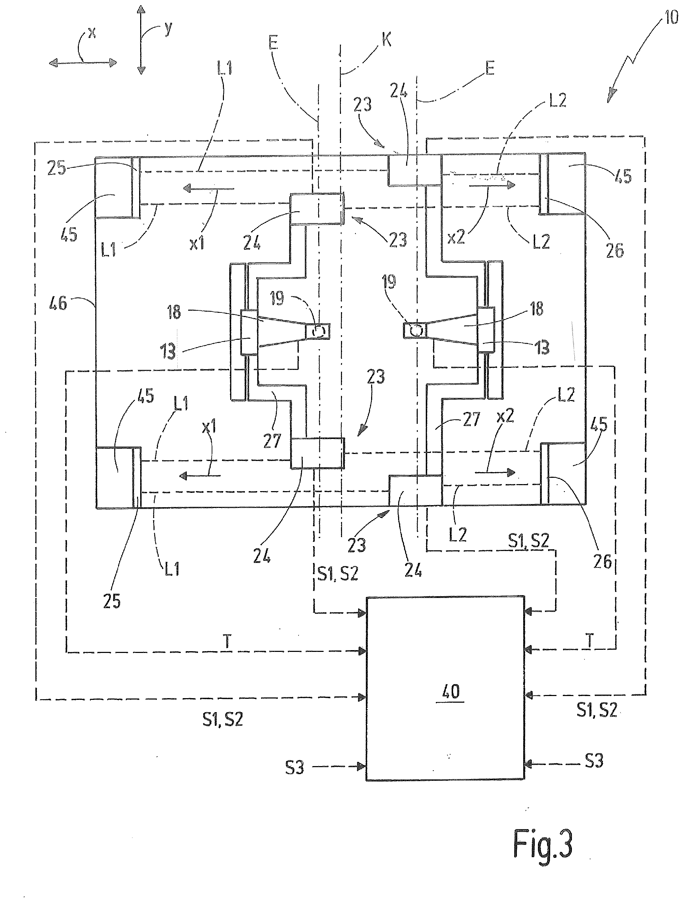

In der Auswerteeinheit 40 kann außerdem sowohl der korrigierte erste Abstand als auch der korrigierte zweite Abstand verwendet werden, um eine korrigierte Position der Tastsystemebene E in der ersten Raumrichtung x zu ermitteln. Dies kann durch Mittelwertbildung oder dergleichen erfolgen. Dadurch können Messungenauigkeiten weiter verringert werden. Es können alle verfügbaren Messwerte zur Korrektur verwendet werden, beispielsweise die Messergebnisse durch die vier Lasermessstrahlen L1, L2 aus der Ausführungsform gemäß Fig. 1 und 2 oder durch die acht Lasermessstrahlen L1, L2, L3 aus der Ausführungsform gemäß Fig. 3.

Bei dem in den Figuren 1 und 2 veranschaulichten Ausführungsbeispiel sind zwei Interferometeranordnungen 23 vorhanden. Die Bestimmung der Position der Tastsystemebene E erfolgt daher räumlich getrennt an zwei unterschiedlichen Stellen, die jeweils denselben Abstand von einer Mittelebene M aufweisen. Dadurch wird eine virtuelle Abbe-Ebene in die Mittelebene M gelegt. Wenn das Werkstück durch die Tasteinheit 18 in der Mittelebene M angetastet wird, entsteht eine sehr hohe Genauigkeit. Kippbewegungen einer Baueinheit aus dem Trägerteil 13, den Halterungen 27, den Laserinterferometern 24 sowie der Tasteinheit 18 um eine Achse, die sich in die dritte Raumrichtung z erstreckt, werden erkannt und können bei der Ermittlung der Längenmessgröße durch eine entsprechende Korrektur in der Auswerteeinheit 40 berücksichtigt werden.

Beim Antasten eines Werkstücks können verschiedene Längenmessgrößen ermittelt werden, beispielsweise ein Außendurchmesser oder Innendurchmesser eines zylindrischen bzw, hohlzylindrischen Werkstücks, die Kontur einer Oberfläche, usw.

Beim Initialisieren der Messvorrichtung 10 vor dem erstmaligen Betrieb wird durch eine externe Einrichtung, beispielsweise ein hochgenaues Refraktometer, eine Wetterstation, usw., der Brechungsindex der Luft neben der Messvorrichtung 10 ermittelt. Wegen lokaler Schlierenbildung oder anderer lokaler Einflüsse muss der Brechungsindex der externen Einrichtung aber nicht zwingend mit dem Brechungsindex der Luft an der wenigstens einen Interferometeranordnung 23 übereinstimmen. Deswegen werden während des Initialisierens die Messvorrichtung 10 und externe Einrichtung solange betrieben, bis eine Synchronität in der Änderung der Messsignale der wenigstens einen Interferometeranordnung 23 und der externen Einrichtung vorliegt. Der in diesem Zustand ermittelte Brechungsindex wird der Auswerteeinheit 40 vorgegeben und beim Messbetrieb verwendet.

Somit ist der Brechungsindex zu Beginn der Messung bekannt. Alle Veränderungen in der ermittelten Abstandssumme aus dem gemessenen ersten Abstand A1 und dem gemessenen zweiten Abstand A2 lassen sich daher auf veränderte Umgebungsbedingungen zurückführen. Solche Veränderungen resultieren im Wesentlichen in einer Veränderung der Lichtwellenlänge im ersten Messweg 36 oder im zweiten Messweg 37, was stark schematisiert in Figur 5 anhand des ersten Abstandes A1 veranschaulicht ist. Die umgebungsbedingte Veränderung wird daher in der Interferometeranordnung 23 in Echtzeit an der Stelle erfasst, an der auch die Messung zur Bestimmung der Position der Tastsystemebene E erfolgt, die wiederum für die Messung eines Längenmesswertes mittels der Tasteinheit 18 erforderlich ist. Dadurch werden Fehler vermieden, die sich beim Ermitteln der Umgebungsbedingungen, insbesondere der aktuellen Lichtwellenlänge, mit einem räumlichen Abstand zur wenigstens einen Interferometeranordnung 23 ergeben. Beim Ausführungsbeispiel wird durch jede vorhandene Interferometeranordnung 23 selbst, also unmittelbar am Messort eine umgebungsbedingten Messbeeinflussung ermittelt, so dass sich lokale Unterschiede in den Umgebungsbedingungen nicht negativ auf die Messgenauigkeit auswirken.

Nach dem Ermitteln und Vorgeben des Brechungsindex bzw. der kalibrierten Lichtwellenlänge kann beim Initialisieren außerdem die Orientierung der Reflektoren 25, 26 im Raum bzw. relativ zueinander ermittelt werden. Der erste Abstand A1 und der zweite Abstand A2 können an mehreren Stellen am ersten und zweiten Reflektor 25, 26 einer Interferometeranordnung 23 ermittelt werden. Dadurch kann der Auswerteeinheit 40 an jeder möglichen Position des Laserinterferometers 24 relativ zu den beiden Reflektoren 25, 26 der betreffenden Interferometeranordnung 23 ein Reflektorabstand R vorgegeben werden. Während späterer Messungen eines Werkstücks können dann auch konstruktiv bedingte Abstandsänderungen des Reflektorabstands R berücksichtigt werden bei der Ermittlung eines korrigierten ersten Abstandes und/oder eines korrigierten zweiten Abstandes und/oder einer korrigierten Position der Tastsystemebene E.

In Figur 3 ist schematisch ein weiteres Ausführungsbeispiel der Messvorrichtung 10 dargestellt. Dort sind zwei Tasteinheiten 18 an jeweils einem separaten Trägerteil 13 angeordnet. Jedes Trägerteil 13 ist über eine Positionieranordnung 12 positionierbar. An jedem Trägerteil 13 ist wenigstens ein und sind beispielsgemäß zwei Laserinterferometer 24 jeweils über eine Halterung 27 unbeweglich angeordnet. Jedes Laserinterferometer 24 bildet gemeinsam mit einem zugeordneten ersten Reflektor 25 und einem zugeordneten zweiten Reflektor 26 eine Interferometeranordnung 23. Bei diesem Beispiel ist jeder erste Reflektor 25 und jeder zweite Reflektor 26 Bestandteil einer Interferometeranordnung 23 für jeweils eine der beiden Tasteinheiten 18. Somit kann ein Messrahmen 44 mit vier Säulen 45 und insgesamt vier Reflektoren 25, 26 auch für die in Figur 3 vorgesehenen vier Interferometeranordnungen 23 verwendet werden.

Bei dem in Figur 1 dargestellten Ausführungsbeispiel der Messvorrichtung 10 ist eine weitere optionale Ausgestaltungsmöglichkeit schematisch dargestellt. Analog zu der vorstehend beschriebenen Anordnung kann das Messprinzip nicht nur für die erste Raumrichtung x, sondern auch für die dritte Raumrichtung z verwendet werden. Jedes Laserinterferometer 24 kann dazu eingerichtet sein, einen dritten Lasermessstrahl L3 in einer dritten Abstrahlrichtung z3 auf einen dritten Reflektor 50 zu richten und auch einen vierten Lasermessstrahl L4 in einer der dritten Abstrahlrichtung z3 entgegengesetzten vierten Abstrahlrichtung z4 auf einen vierten Reflektor (nicht dargestellt) zu richten. Dazu sind entsprechend vier Laserinterferometereinheiten bzw. zwei Doppelinterferometer in der Interferometeranordnung 23 vorhanden. Die dritte und vierte Abstrahlrichtung z3, z4 sind beispielsgemäß parallel zur dritten Raumrichtung z ausgerichtet. Die dritte und vierte Abstrahlrichtung z3, z4 ist rechtwinklig zur ersten Abstrahlrichtung x1 und zur zweiten Abstrahlrichtung x2. Der dritte Reflektor 50 ist beispielsgemäß an der Grundplatte 46 des Messrahmens 44 angeordnet und befindet sich jeweils zwischen dem ersten Reflektor 25 und dem zweiten Reflektor 26 der Interferometeranordnung 23. Der vierte Reflektor kann beispielsweise an einem die Säulen 45 mit Abstand zu der Grundplatte 46 verbindenden Querstück angeordnet werden. Dadurch lässt sich zusätzlich zu der Position der Tastsystemebene E in der ersten Raumrichtung x ein weiterer Positionswert in der dritten Raumrichtung z für das Trägerteil 13 bzw. die Tasteinheit 18 ermitteln. Das Laserinterferometer 24 kann ein entsprechendes drittes und viertes Messsignal S3, S4 erzeugen und an die Auswerteeinheit 40 übermitteln (optional in den Figuren 2 und 3 veranschaulicht). Ein solches drittes bzw. viertes Messsignal S3, S4 kann durch jedes vorhandene Laserinterferometer 24 jeder Interferometeranordnung 23 erzeugt und an die Auswerteeinheit 40 übermittelt werden.

In einer weiteren Ausführung kann jede Interferometeranordnung 23 bis zu sechs Laserinterferometer bzw. drei Doppelinterferometer aufweisen, um in eine, zwei oder alle drei Raumrichtungen x, y, z zu messen.

Vor Beginn einer Messung kann die Messvorrichtung 10 auf eine Kalibrierebene K kalibriert werden. Die Kalibrierebene K erstreckt sich in der Mitte zwischen dem ersten Reflektor 25 und dem zweiten Reflektor 26 rechtwinklig zur ersten Raumrichtung x bzw. parallel zur Tastsystemebene E. Sind die Tastsystemebene E und die Kalibrierebene K deckungsgleich, dann befindet sich die Tasteinheit 18 in einer Ausgangs- bzw. Nulllage. Ausgehend hiervon können die Längenmessgrößen eines Werkstücks gemessen werden. Die Kalibrierebene K erstreckt sich vorzugsweise mittig durch eine entsprechende Aufnahme oder Halterung für das Werkstück.

Die Erfindung betrifft eine Messvorrichtung 10 sowie ein Verfahren zur Ermittlung einer Längenmessgröße eines Werkstücks. Über eine Positionieranordnung 12 kann ein Trägerteil 13, an dem eine Tasteinheit 18 in einer ersten Raumrichtung x unbeweglich angeordnet ist, bewegt bzw. positioniert werden. Mit dem Trägerteil 13 ist wenigstens ein Laserinterferometer 24 in der ersten Raumrichtung x unbeweglich verbunden. Zur Bildung einer Interferometeranordnung 23 ist jedem Laserinterferometer 24 ein erster Reflektor 25 und ein zweiter Reflektor 26 zugeordnet. Die beiden Reflektoren 25, 26 liegen sich in der ersten Raumrichtung x mit Abstand gegenüber. Das Laserinterferometer 24 erzeugt mittels eines ersten Lasermessstrahls L1 und eines zweiten Lasermessstrahls L2 ein erstes Messsignal S1, das den Abstand des Laserinterferometers 24 vom ersten Reflektor 25 in der ersten Raumrichtung x beschreibt und ein zweites Messsignal S2, das den Abstand des Laserinterferometers 24 vom zweiten Reflektor 26 in der ersten Raumrichtung x beschreibt. Eine in der ersten Raumrichtung x gegenüber dem Trägerteil 13 bzw. der Tasteinheit 18 unbewegliche Tastsystemebene E, die sich rechtwinklig zu dieser ersten Raumrichtung x erstreckt, hat daher in der ersten Raumrichtung x eine Position, die sich über die Abstände des Laserinterferometers 24 vom ersten Reflektor 25 bzw. zweiten Reflektor 26 ermitteln lässt. Durch die vorhandene Redundanz lassen sich Umgebungseinflüsse auf die Messung in Echtzeit und lokal an der Stelle, an der mit dem Laserinterferometer 24 gemessen wird, ermitteln und bei der Messung berücksichtigen.

### Bezugszeichenliste:

- 10: Messvorrichtung
- 11: Maschinenbasis
- 12: Positionieranordnung
- 13: Trägerteil
- 14: Schlittenanordnung

- 18: Tasteinheit
- 19: Tastkörper

- 23: Interferometeranordnung
- 24: Laserinterferometer
- 25: erster Reflektor
- 26: zweiter Reflektor
- 27: Halterung

- 30: Laserquellenanordnung
- 31: erster Strahlteiler
- 32: zweiter Strahlteiler
- 33: Referenzlichtweg
- 34: Spiegel
- 35: Kamera
- 36: erster Messlichtweg
- 37: zweiter Messlichtweg

- 40: Auswerteeinheit

- 44: Messrahmen
- 45: Säule
- 46: Grundplatte
- 47: Aussparung
- 50: dritter Reflektor
- E: Tastsystemebene
- M: Mittelebene
- K: Kalibrierebene
- L1: erster Lasermessstrahl
- L2: zweiter Lasermessstrahl
- L3: dritter Lasermessstrahl
- L4: vierter Lasermessstrahl
- S: Schwenkachse
- S1: erstes Messsignal
- S2: zweites Messsignal
- S3: drittes Messsignal
- S4: viertes Messsignal
- T: Tastsignal
- x: erste Raumrichtung
- x1: erste Abstrahlrichtung
- x2: zweite Abstrahlrichtung
- y: zweite Raumrichtung
- z: dritte Raumrichtung
- z3: dritte Abstrahlrichtung
- z4: vierte Abstrahlrichtung

## Patentansprüche

1. Messvorrichtung (10) zur Erfassung wenigstens einer Längenmessgröße,
mit einer Maschinenbasis (11), an der ein Trägerteil (13) in wenigstens einem Freiheitsgrad (x) bewegbar gelagert ist,
mit einer Positionieranordnung (12), die dazu eingerichtet ist, das Trägerteil (13) in dem wenigstens einen Freiheitsgrad (x) zu positionieren,
mit einer zum Antasten eines Werkstücks eingerichteten Tasteinheit (18), die am Trägerteil (13) angeordnet ist,
wobei das Trägerteil (13) eine Tastsystemebene (E) definiert, deren Position relativ zum Trägerteil (13) unveränderlich ist,
mit wenigstens einer Interferometeranordnung (23), aufweisend ein Laserinterferometer (24), das dazu eingerichtet ist, einen ersten Lasermessstrahl (L1) in eine erste Abstrahlrichtung (x1) auf einen ersten Reflektor (25) abzustrahlen und den am ersten Reflektor (25) reflektierten ersten Lasermessstrahl (L1) zu empfangen, und das dazu eingerichtet ist, einen zweiten Lasermessstrahl (L2) in eine zu der ersten Abstrahlrichtung (x1) entgegengesetzte zweite Abstrahlrichtung (x2) auf einen zweiten Reflektor (26) abzustrahlen und den am zweiten Reflektor (26) reflektierten zweiten Lasermessstrahl (L2) zu empfangen, wobei die erste und die zweite Abstrahlrichtung (x1, x2) rechtwinkelig zur Tastsystemebene (E) orientiert sind,
wobei der erste Reflektor (25) und der zweite Reflektor (26) an der Maschinenbasis (11) angeordnet sind, wenn das Laserinterferometer (24) am Trägerteil (13) angeordnet ist, und wobei der erste Reflektor (25) und der zweite Reflektor (26) am Trägerteil (13) angeordnet sind, wenn das Laserinterferometer (24) an der Maschinenbasis (11) angeordnet ist,
mit einer Auswerteeinheit (40), die dazu eingerichtet ist, anhand der zurückgelegten Wege der Lasermessstrahlen (L1, L2) die Position der Tastsystemebene (E) relativ zu den Reflektoren (25, 26) und/oder der Maschinenbasis (11) zu ermitteln.

2. Messvorrichtung nach Anspruch 1,
**dadurch gekennzeichnet, dass** die Auswerteeinheit (40) dazu eingerichtet ist, eine durch Umgebungseinflüsse bedingte Längenänderung der Messvorrichtung (10) und/oder Wellenlängenänderung des Laserlichts in den Lasermessstrahlen (L1, L2) zu erfassen und bei der Ermittlung der Position der Tastsystemebene (E) zu berücksichtigen.

3. Messvorrichtung nach Anspruch 2,
**dadurch gekennzeichnet, dass** die Auswerteeinheit (40) dazu eingerichtet ist, die Längenänderung der Messvorrichtung (10) und/oder die Wellenlängenänderung des Laserlichts in den Lasermessstrahlen (L1, L2) in Echtzeit zu erfassen und bei der Ermittlung der Position der Tastsystemebene (E) zu berücksichtigen.

4. Messvorrichtung nach einem der Ansprüche 1 bis 3,
**dadurch gekennzeichnet, dass** die Auswerteeinheit (40) dazu eingerichtet ist, anhand der Messung mit dem ersten Lasermessstrahl (L1) einen ersten Abstand (A1) der Tastsystemebene (E) zu dem ersten Reflektor (25) und anhand der Messung mit dem zweiten Lasermessstrahl (L2) einen zweiten Abstand der Tastsystemebene (E) zu dem zweiten Reflektor (26) zu ermitteln.

5. Messvorrichtung nach Anspruch 4,
**dadurch gekennzeichnet, dass** die Auswerteeinheit (40) dazu eingerichtet ist, bei der Ermittlung der Position der Tastsystemebene (E) zu berücksichtigen, dass die Abstandssumme aus dem ersten Abstand (A1) und dem zweiten Abstand (A2) den bekannten Reflektorabstand (R) zwischen dem ersten Reflektor (25) und dem zweiten Reflektor (26) beschreibt und aus einer Änderung in der Abstandssumme zu erkennen, dass sich eine Länge der Messvorrichtung (10) und/oder die Lichtwellenlänge aufgrund von Umgebungseinflüssen geändert hat.

6. Messvorrichtung nach Anspruch 5,
**dadurch gekennzeichnet, dass** die Auswerteeinheit (40) dazu eingerichtet ist, auf Basis der Änderung in der Abstandssumme eine korrigierten ersten Abstand (A1) und/oder einen korrigierten zweiten Abstand (A2) zu berechnen.

7. Messvorrichtung nach Anspruch 6,
**dadurch gekennzeichnet, dass** die Auswerteeinheit (40) dazu eingerichtet ist, aus dem korrigierten ersten Abstand und/oder dem korrigierten zweiten Abstand eine korrigierte Position der Tastsystemebene (E) zu ermitteln.

8. Messvorrichtung nach einem der vorhergehenden Ansprüche,
**dadurch gekennzeichnet, dass** zwei Interferometeranordnungen (23) vorhanden sind, wobei die Laserinterferometer (24) der beiden Interferometeranordnungen (23) jeweils denselben oder einen bekannten Abstand zu einer Mittelebene (M) aufweisen, die durch die Tasteinheit (18) verläuft und rechtwinkelig zu der Tastsystemebene (E) ausgerichtet ist.

9. Messvorrichtung nach Anspruch 8,
**dadurch gekennzeichnet, dass** das Antasten des Werkstücks mittels der Tasteinheit (18) in der Mittelebene (M) erfolgt.

10. Messvorrichtung nach einem der Ansprüche 1 bis 7,
**dadurch gekennzeichnet, dass** eine einzige Interferometeranordnung (23) vorhanden, die in einer Mittelebene (M) angeordnet ist, die durch die Tasteinheit (18) verläuft und rechtwinkelig zu der Tastsystemebene (E) ausgerichtet ist.

11. Messvorrichtung nach einem der vorhergehenden Ansprüche,
**dadurch gekennzeichnet, dass** der Auswerteeinheit (40) ein Brechungsindexwert der Luft als Anfangswert vorgegeben wird.

12. Messvorrichtung nach einem der vorhergehenden Ansprüche,
**dadurch gekennzeichnet, dass** die vorhandenen Reflektoren (25, 26) an einem an der Maschinenbasis (11) angeordneten Messrahmen (44) angeordnet sind.

13. Messvorrichtung nach Anspruch 12,
**dadurch gekennzeichnet, dass** die vorhandenen Reflektoren (25, 26) jeweils an einer Säule (45) des Messrahmens (44) angeordnet sind, die sich paarweise gegenüberliegen.

14. Messvorrichtung nach Anspruch 13,
**dadurch gekennzeichnet, dass** die Säulen (45) über eine gemeinsame Grundplatte (46) des Messrahmens (44) miteinander verbunden sind.

15. Messvorrichtung nach einem der vorhergehenden Ansprüche,
**dadurch gekennzeichnet, dass** das Laserinterferometer (24) der wenigstens einen Interferometeranordnung (23) dazu eingerichtet ist, einen dritten Lasermessstrahl (L3) in eine rechtwinkelig zu der ersten und der zweiten Abstrahlrichtung (x1, x2) ausgerichtete dritte Abstrahlrichtung (z3) auf einen dritten Reflektor (50) abzustrahlen und den am dritten Reflektor (50) reflektierten dritten Lasermessstrahl (L3) zu empfangen.

16. Messvorrichtung nach Anspruch 15,
**dadurch gekennzeichnet, dass** das Laserinterferometer (24) der wenigstens einen Interferometeranordnung (23) dazu eingerichtet ist, einen vierten Lasermessstrahl (L4) entgegengesetzt zu der dritten Abstrahlrichtung (z3) in eine vierte Abstrahlrichtung (z4) auf einen vierten Reflektor abzustrahlen und den am vierten Reflektor reflektierten dritten Lasermessstrahl (L4) zu empfangen.

17. Verfahren zur Erfassung wenigstens einer Längenmessgröße unter Verwendung einer Messvorrichtung (10) mit einer Maschinenbasis (11), an der ein Trägerteil (13) in wenigstens einem Freiheitsgrad (x) bewegbar gelagert ist, mit einer Positionieranordnung (12), die dazu eingerichtet ist, das Trägerteil (13) in dem wenigstens einen Freiheitsgrad (x) zu positionieren, mit einer zum Antasten eines Werkstücks eingerichteten Tasteinheit (18), die am Trägerteil (13) angeordnet ist, wobei die Tasteinheit (18) eine Tastsystemebene (E) definiert, mit wenigstens einer Interferometeranordnung (23) aufweisend ein Laserinterferometer (24), einen ersten Reflektor (25), und einen zweiten Reflektor (26), wobei die Reflektoren (25, 26) an der Maschinenbasis (11) angeordnet sind, wenn das Laserinterferometer (24) am Trägerteil (13) angeordnet ist und die am Trägerteil (13) angeordnet sind, wenn das Laserinterferometer (24) an der Maschinenbasis (11) angeordnet ist, und mit einer Auswerteeinheit (40), wobei das Verfahren folgende Schritte aufweist:
- Abstrahlen eines ersten Lasermessstrahl (L1) in eine erste Abstrahlrichtung (x1) auf den ersten Reflektor (25) und Empfangen des am ersten Reflektor (25) reflektierten ersten Lasermessstrahls (L1),
- Abstrahlen eines zweiten Lasermessstrahl (L1) in eine zu der ersten Abstrahlrichtung (x1) entgegengesetzte zweite Abstrahlrichtung (x2) auf den zweiten Reflektor (26) und Empfangen des am zweiten Reflektor (26) reflektierten zweiten Lasermessstrahls (L2),
- Ermitteln der Position der Tastsystemebene (E) relativ zu den Reflektoren (25, 26) und/oder der Maschinenbasis (11) anhand der zurückgelegten Wege der Lasermessstrahlen (L1, L2).

18. Verfahren nach Anspruch 17,
**dadurch gekennzeichnet, dass** in einem Initialisierungsverfahen der Messvorrichtung (10) mittels eines externen Refraktometers ein Anfangswert für den Brechungsindex der Luft in der Umgebung der Messvorrichtung (10) ermittelt und der Auswerteeinheit (40) vorgegeben wird.
